# EUROPEAN PATENT APPLICATION

(11) **EP 1 792 659 A1**
(43) Date of publication of application: **06.06.2007**
(21) Application number: 05026087.6
(22) Date of filing: 30.11.2005
(51) Int. Cl.: B03C 3/08, B03C 3/47

(54) **Design of an electrostatic precipitator**

(71) Applicant: VTT Industrial Systems, 33101 Tampere (FI); Valeo Systèmes Thermiques, 78321 Le Mesnil St Denis Cedex (FR)
(72) Inventor: Lehtimäki, Matti, 37550 Lempäälä (FI); Taipale, Aimo, 33720 Tampere (FI); Niemeläinen, Matti, 39200 Kyröskoski (FI); Ladrech, Frédéric, 78310 Maurepas (FR); Sirot, Jean Pascal, 78180 Montigny le Bretonneux (FR)
(74) Representative: Degwert, Hartmut

(57) **Abstract**

A precipitator, which comprises at least a charger unit (1), which is arranged to electrically charge the particles in the air flow to be purified, and a collector unit (2), which is arranged to collect the charged particles. The collector unit comprises a first set of first electrode plates (21), which are voltage electrodes, and a second set of second electrode plates (22), which are collecting electrodes. The width (w) of the electrode plate (21, 22) in the flow direction (F) is smaller than the length (1) of the electrode plate in a direction perpendicular to the flow direction, and the direction of the surface of the electrode plate changes in the flow direction in order to brace the electrode plate.

## Description

### Field of the invention

The invention relates to a precipitator according to the preamble of the appended claim 1 and a vehicle according to the preamble of the appended claim 25.

### Background of the invention

Different kinds of electric filters are generally used for removing particles from gas flows. Electronic filters are more efficient at purifying air from sub-micron particles, especially particles with a diameter of 0.3 µm, than conventional filters. The basic principle is to electrically charge the particles, for example by means of corona discharge. After this, the charged particles are collected by means of an electric field. For example single-stage electric filters - an electric filter where charging and collecting the particles takes place in the same unit - are used in power plants and other purification applications of process discharges. In a two-stage electric filter the charging takes place in a separate charger part and collecting the charged particles takes place in a separate collector unit.

Only mechanical filters have often been used in automotive applications to purify the cabin air, but when the aim is more pure indoor air, a solution has been searched from electric filters. However, automotive use sets very high demands on the solutions, because in automotive use there are often such vibration, humidity and temperature fluctuations that do not often occur in other uses. In addition, vehicles often have a limited space for use for a precipitator and the available electric power is limited as well.

Publication US 5,454,859 discloses an air cleaning device, which comprises, *inter alia,* a two stage electric filter. In this solution the different structures of the air cleaning device require considerable space, and therefore the installation the air cleaning device disclosed in the publication in a vehicle must be taken into account already when designing the vehicle and it cannot necessarily be placed in all vehicles.

### Summary of the invention

The main purpose of the present invention is to provide a precipitator solution, which enables the manufacture of a small and effective precipitator, for example, for automotive use.

To attain this purpose, the precipitator according to the invention is primarily characterized in what will be presented in the characterizing part of the independent claim 1. The vehicle according to the invention is, in turn, primarily characterized in what will be presented in the characterizing part of the independent claim 25. The other, dependent claims will present some preferred embodiments of the invention,

The basic idea of the invention is to form a precipitator, which comprises at least a charger unit, which is arranged to electrically charge the particles in the air flow to be purified, and a collector unit, which is arranged to collect the charged particles, The collector unit comprises a first set of first electrode plates, which are voltage electrodes, and a second set of second electrode plates, which are collector electrodes. In addition, the dimension of the electrode plate of the precipitator according to the invention in the flow direction is smaller than the length of the electrode plate in a direction perpendicular to the flow direction, and the direction the electrode plate.

The invention relates to an electric precipitator, which solution is based on techniques characteristic to electric filters: the electric charging of particles by means of corona discharge and collecting the electrically charged particles by means of a so-called electric filter cell. The new filter solution is based on solutions, by means of which the properties of an electric filter cell can be significantly improved. Especially by means of shaped electrodes, such as, for example, curved electrodes, it is possible to implement a filter cell with very thin materials as well. By means of the structure in question it is possible to implement a filter cell, where the distance between electrodes is very small, i.e. a large collecting area can be fitted to a small volume. Due to a steady structure, the attachment of the electrodes can be centralized exclusively to the ends of the cells. The attachment of electrodes with a new technique enables the minimization of the amount of high voltage insulators sensitive to contamination and their placement in the edge parts of the cell, where it is possible to utilize the contamination shielding of the insulators. The new cell structure also facilitates the use of non-metallic electrode materials. By means of these materials the breakdown sensitivity characteristic to electric filter cells can be substantially decreased, and the reliability of the cell can be improved.

The filter solution is primarily intended for purifying vehicle cabin air, but different applications of the filter solution can be widely applied in other air purification applications as well (room air purifiers, space-specific supply air filters).

By means of the different applications of the invention, the filter can be implemented in a manner that is efficient, reliable, has low pressure loss and fits into a small space. As the most significant advantages of the filter can be mentioned high collecting efficiency, very low pressure loss and small size. A significant advantage from the point of view of the user is the possibility for efficient air purification also when the space available for use for the filter is very small and the air flow to be purified is large in relation to said space.

By means of different curved and folded electrodes it is possible to implement a structure, where the flow direction changes when the air passes through the filter unit, i.e. the collector unit, This property is very useful, *inter alia,* in automotive applications, where there is very little space available for use and the air conditioning devices are so complex in their form that the straight channel parts advantageous for a electric filter cannot usually be implemented. The possibility to integrate the electric filter as a part of the direction-changing flow channel substantially facilitates the use of an electric filter in complex and narrow air conditioning devices.

Further, the electronic filter is more efficient at purifying air from sub-micron particles, especially particles with a diameter of 0.3 µm, than conventional filters. The efficiency of conventional filters which stop particles by mechanical process for sub-micron particles is between 20 and 40 % whereas the efficiency of electronic filters is between 60 and 80 %.

Due to the design of the collector unit, the initial efficiency is low (10 to 20 Pa at 225 m³/h). The electrodes of the collector unit are arranged parallel to the airflow to prevent a clogging of the collector unit. The permeability of the collector unit stays stable during lifetime and the pressure drop of the whole system stays roughly constant increasing lifetime of the precipitator. The permeability of a standard non woven filter presents a high pressure drop which increases with lifetime and the maintenance is define due to this. The precipitator is small. Therefore, it can be used for automotive applications.

### Description of the drawings

In the following, the invention will be described in more detail with reference to the appended principle drawings, in which
- Figure 1 shows a cross-section of a precipitator according to the invention
- Figure 2 shows a filter cell from the flow direction
- Figure 3 shows a cross-section of the filter cell at line III-III of Fig. 2
- Figure 4 shows a cross-section of two adjacent electrodes in accordance with a first embodiment
- Figure 5 shows a cross-section of two adjacent electrodes in accordance with a second embodiment
- Figure 6 shows a cross-section of two adjacent electrodes in accordance with a third embodiment
- Figure 7 shows a solution for a side profile of the collector and voltage electrodes
- Figure 8 shows a solution for a collector and voltage electrode
- Figure 9 shows another solution for a collector and voltage electrode
- Figure 10 shows a principle of a precipitator
- Figure 11 shows a principle of a precipitator equipped with a pre-filter and an after-filter
- Figure 12 shows another principle of a precipitator equipped with a pre-filter
- Figure 13 shows a vehicle equipped with a precipitator.

For the sake of clarity, the figures only show the details necessary for understanding the invention. The structures and details that are not necessary for understanding the invention but are obvious for anyone skilled in the art have been omitted from the figures to emphasize the characteristics of the invention.

### Detailed description of the invention

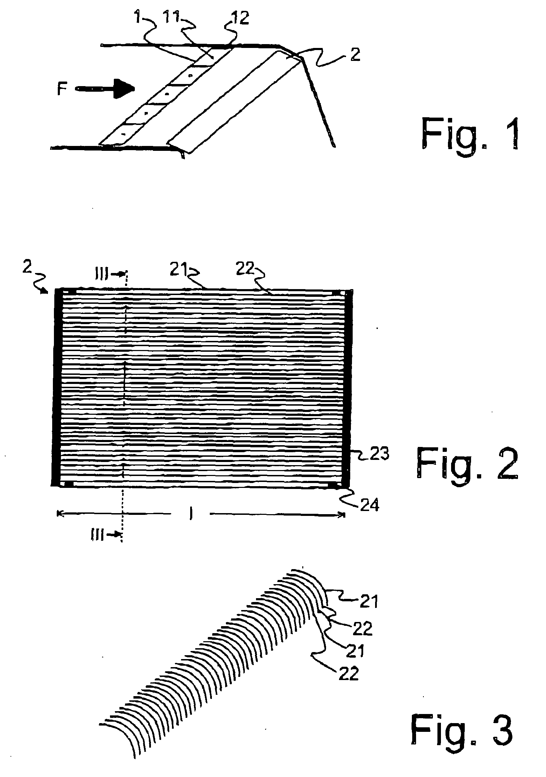

Figure 1 shows a cross-section of a precipitator according to the invention. The cross-section is in the direction of the flow direction F of the air to be purified, i.e. the device is shown from a direction perpendicular to the flow direction. The airflow of an automotive air conditioning unit is in the range of 50 to 600 m³/h. A comfort airflow is between 100 and 250 m³/h. As an example for the automotive field, the precipitator has a frontal area in the range of 4 to 12 dm² and comprises at least a charger unit 1, which is arranged to electrically charge the particles in the air flow to be purified, and a collector unit 2, which is arranged to collect the charged particles. The charger unit 1 consists of several plates and wires.

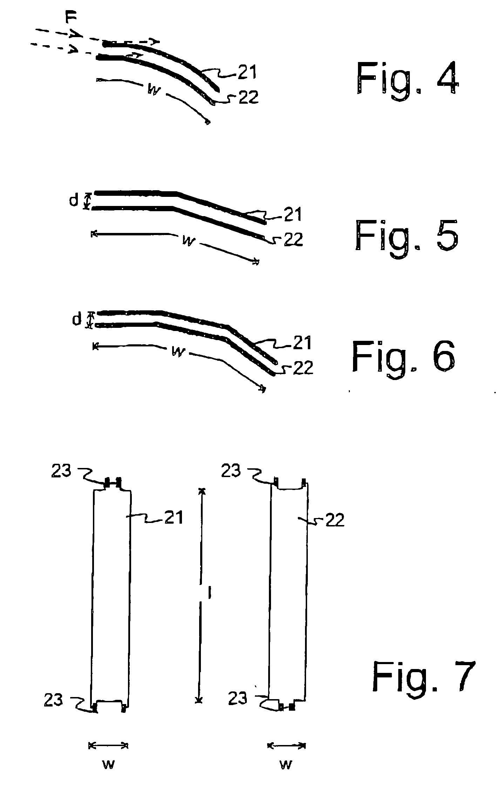

The collector unit 2, i.e. the filter cell, in turn, comprises two types of electrodes, voltage electrodes 21 and collector electrodes 22. In the filter cell 2 the voltage electrodes 21 and the collector electrodes 22 alternate with each other in such a manner that a collector electrode settles between two voltage electrodes. A filter cell 2 according to an application is shown in figure 2 seen from the flow direction and Fig. 3 shows a cross section of the filter cell 2 at line III-III of Fig. 2.

The small size of the space available for use in automotive applications requires that the dimensions of the precipitator must be substantially different than in conventional electric filters. From the point of view of operation it is advantageous if the filter cell 2 can be kept as thin as possible (the minimum thickness of the filter cell 2 in the flow direction F (width w) is 10 mm; in an application the thickness of the filter cell 2 is approx. 25 mm). The length 1 of the electrode plates 21, 22 is between 50 and 100 mm. The collecting area of the filter cell 2 must, however, be large enough, so that the required separating capacity can be reached. Because of this, new solutions have been developed in the solution according to the invention for, *inter alia,* the shape of electrodes 21, 22, electrode attachment, electric couplings, materials, charger 1 and shielding. In the following, these solutions, which can be combined to implement different solutions, are described in more detail.

A voltage controlled supply generates an electric field between the electrodes 21, 22. The nominal output voltage value of the voltage supply is between 1.5 and 3 kV, preferably 2 kV (+/-10 %), The output current is in a range smaller than 0.1 mA. The minimum thickness of the collector unit 2 in the flow direction is 10 mm. For the comfort airflow of 225 m³/h, the thickness of the collector unit 2 is increased to 25 mm. The distance d between the voltage and collector electrodes 21, 22 is in the range of 1.7 to 2.3 mm, especially 2 mm.

### The shape of the electrodes

The collecting area of the filter cell 2 is affected by the number of electrodes 21, 22 and the size of the electrodes (i.e. the active area of electrodes). The area of the electrode 21, 22 is, in turn, limited by the space available for use, which in typical automotive solutions is very limited. When the aim is a filter structure 2 as thin as possible, the electrodes 21, 22 are significantly longer in the cross direction than in the flow direction F (i.e, the length 1 of the electrode plate is larger than its width w). In addition, the distance d between the voltage and collector electrodes 21, 22 of the filter cell 2 is to be kept very small, so that a large enough collecting area can be formed in the filter by arranging as many electrodes as possible to the filter cell. The distance d between the voltage and collector electrodes 21, 22 of the filter cell 2 should be 1 to 7 mm, depending on the use. In an application the distance d between the voltage and collector electrodes 21, 22 is in the range of 1.7 to 2.3 mm, especially 2 mm. Thus, the electrodes 21, 22 used in the filter cell 2 must be very thin and their mechanical rigidity must be so good that the distance d between the electrodes can be kept within very strict limits.

Sufficient rigidity is reached by using shaped electrodes 21, 22 in the flow direction F, the surface direction of which electrodes changes in the flow direction. In an advantageous application curved electrodes 21, 22 are used, as is shown in Fig. 4. By means of the curved shape a very steady structure is provided even with very thin plate thicknesses (less than 1 mm). In an application the thickness of the electrodes 21, 22 is only approximately 0.2 mm. In another embodiment shown in Fig. 5 the direction of the surface of the electrode plate 21, 22 changes abruptly at one point in the flow direction F. There is a type of a fold in the electrode then. In a third application according to Fig. 6 the electrode plate 21, 22 comprises several folds. It is also possible to shape the electrode plate 21, 22 in such a manner that it comprises both folds and curved portions. By means of different curved and folded electrodes 21, 22 it is possible to implement a structure, where the flow direction F (Fig. 4) changes when the air passes through the filter unit 2, i.e. the collector unit. The possibility to integrate the electric filter as a part of the direction-changing flow channel substantially facilitates the use of an electric filter in complex and narrow air conditioning devices. Besides, the curved shape supports the inertia force of the particles attached to the electrodes 21, 22.

The necessary curvature and/or angle of the fold, by means of which the required rigidity is provided, depends on the application. This is affected by, *inter alia*, the length 1 of the electrode 21, 22, the width w of the electrode, the mutual distance d of the electrodes, the material, and the thickness of the material.

The present invention is not limited to curved and folded electrodes 21, 22. The electrodes 21,22 can also be planar.

### Attachment of the electrodes

By means of the steady cell structure 2 enabling the curved and folded electrodes 21, 22 it is possible to implement another substantial technical improvement to a conventional electric filter structure. By means of the steady structure the attachment structures 23 of the electrodes 21, 22 have been centralized solely to the edge areas of the cell, such as, for example, in Fig. 2. In this manner it is possible to implement an electric filter cell 2, where there are no attachment or support structures inside the cell disturbing the flow and separating capacity.

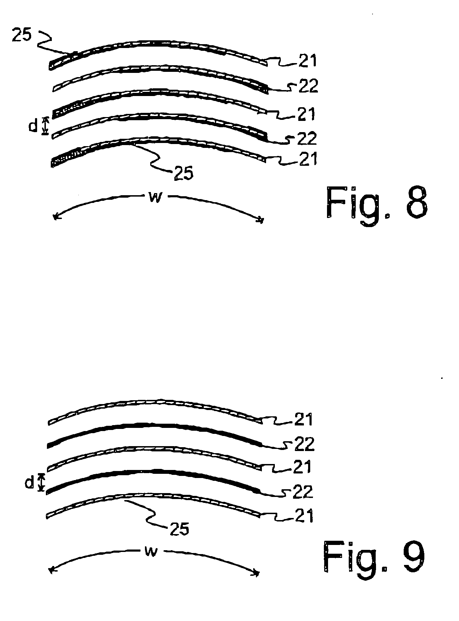

In an advantageous application the attachment of the electrodes 21, 22 is implemented in such a manner that the voltage and collector electrodes are attached to separate attachment structures 23. The attachment structures 23, such as, for example, attachment bars, are of a suitable material, such as, for example, plastic. Fig. 7 shows a basic solution of a side profile of collector and voltage electrodes 21, 22. As can be seen in Fig. 7, the collector electrodes 22 and the voltage electrodes 21 have separate attachment bars 23.

There must be a steady attachment between the voltage and collector electrodes 21, 22, the electric characteristics of which attachment must remain good in all conditions. This attachment can be implemented in a variety of ways. In an application an attachment insulator 24, which at the same time operates as an electric insulator between the voltage and collector electrodes 21, 22, is placed, for example, between the two outermost electrode pairs, i.e. at the edge of the filter cell 2, as can be seen, for example, in Fig. 2. The attachment insulator 24 at the edge of the filter cell 2 can be shielded from contamination quite effectively and, in addition, it is possible to aim a low-power heating to said insulator, if necessary. The heating prevents, *inter alia,* moisture from condensing on the surface of the attachment insulator 24,

### Electric couplings

The electric couplings for the electrodes 21, 22 of the filter cell 2 can be implemented in various ways. It is possible to use conventional wiring and jointing structures in the couplings. The couplings can also be implemented, for example, by means of a partly conductive flexible material. This material can be attached on both edges of the filter cell 2, for example, between the two middle attachment bars 23.

### Electrode materials

A steady cell structure also facilitates the use of non-metallic and different partly conductive electrode materials. With respect to the reliability of the electric filter cell and the elimination of electric breakdowns the metallic electrodes are not the best possible solution in all situations- By means of a material with a suitable conductivity it is possible to restrict the discharge flow caused by a possible breakdown into as small as possible and thus eliminate the sparking that is characteristic to electric filters, On the other hand, the amount of dust collected by the filter cell may become so large that the collected particle mass forms "bridges" between the voltage and collector electrodes. These undesired contacts can therefore form local short circuit bridges between electrodes. In the case of metal electrodes the short circuit causes the weakening of the electric field over the entire area of the electrode. In the case of partly conductive electrodes the short circuit causes the weakening of the electric field over a well-restricted area only, and therefore only a small weakening takes place in the separating capacity.

In order to keep the voltage stable in spite of aging of the components and different present conditions, a voltage controlled generator is preferably used. If dust is on the electrodes 21, 22 the voltage can be increased by the voltage supply, to increase the efficiency of the collector unit 2.

Fig. 8 shows a solution, by means of which the reliability of the filter cell 2 can be substantially improved. The electrodes 21, 22 are manufactured either of insulator material or of some partly conductive material. In the case of insulator material, a suitable conductivity can be implemented by means of surface finishing. It is possible to add a conductive coating 25 on the surface of the electrode 21, 22, by means of which it is ensured that the necessary electric potential can be distributed efficiently over the entire cross-sectional surface of the electrode. In the solution according to the figure 8 it is substantial that the distances between the conductive parts of the voltage and collector electrodes 21, 22 are long or there is insulator material (or partly conductive material) between said parts.

A possible solution is the use of conductive or only partly conductive electrodes in the manner illustrated in Fig. 9. In this case every other electrode 22 is manufactured of conductive material (e.g. aluminium) and every other electrode 21 of partly conductive material (mode for instance on a plastic or paper basis), In this case the conductive electrodes 22 operate as collector electrodes and the partly conductive electrodes 21 as voltage electrodes, i.e. the direction of the electric field between the electrodes is such that the charged particles are carried to the collector electrodes. In principle, the situation could also be vice versa, i.e. the direction of the electric field would be the opposite, in which case the collection of particles would take place on the voltage electrodes 21 presented above, which would thus operate as collector electrodes 22. The precondition of the functionality of the example is a correctly dimensioned conductivity of the material, i.e. a large enough conductivity in order to form the necessary electric field between the electrodes 21, 22.

The electrodes 21, 22 can also be equipped with other properties than conductivity only. In an application the electrodes 21, 22 are formed of a material that adsorbs the desired gases. In another application the electrodes 21, 22 are, in turn, coated with a material that adsorbs the desired gases.

### Charger

The charger unit 1 consists of a succession of several plates and wires, The distance between the plates and wires depends on the air permeability and the detailed geometry of the precipitator. In this embodiment, the distance is in the range of 8 to 10 mm. The width of the plates which are ground electrodes are larger than 8 mm, preferably 10 mm. The wires are discharge electrodes which have a diameter which is between 0.07 and 0.2 mm (preferably 0,15 mm) and are tungsten wires. The thickness of the charger unit 1 in the flow direction is 10 mm.

A current controlled generator is used in order to keep a stable performance with aging. That means if dust is on wires and plates the current can be increased to keep the electric field stable and increase the efficiency of the charger unit 1.

The nominal output current value is between 0.5 to 1 mA, preferably 0.75 mA (+/- 10 %). The output voltage is in the range of 5 to 7 kV, preferably between 5.0 and 5.7 kV.

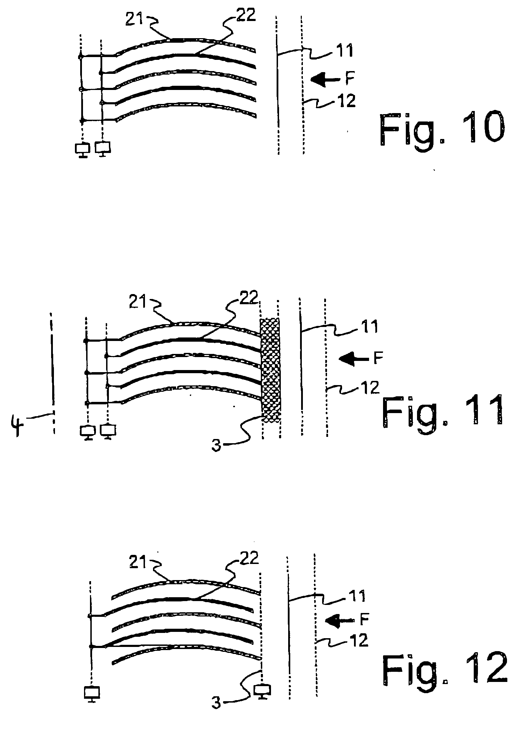

In automotive applications the space reserved for the filter is often very small and therefore the integration of all the necessary parts in a space as small as possible is a primary concern. Therefore, the charger 1, which is often integrated into the air filtering device equipped with an electric filter, such as, for example, a corona charger, should also fit into a space as small as possible. In practice this means that it is advantageous to place the corona charger 1 as close to the collector cell 2 as possible. The proximity of the corona charger 1 can also be utilized in the manners described below. If the corona electrode 11 is close enough to the collector cell 2, the corona flow (=ion flow) freed from the corona electrode can be utilized in the voltage input of the collector cell. In principle the voltage electrodes 21 of the collector cell 2 can be left "floating", in which case they are not actually coupled electrically to anything, i.e, in the coupling shown in fig. 10 the voltage electrodes 21 are not coupled to any voltage source. Thus, under the influence of the corona flow, the potentials of the voltage electrodes 21 settle on a level, which depends on earth currents of the high-voltage insulators and on partial discharges between the voltage electrodes 21 and collector electrodes 22 which are connected to a lower potential e.g. to ground potential. In principle, it is possible to increase the potential difference between the electrodes 21, 22 of the collector cell to a maximum level in this manner. It is also possible that the voltage and collector electrodes 21, 22 are coupled to ground potential via load resistances, in which case the potentials of the electrodes 21, 22 are determined on the basis of the corona flow and the load resistance. Naturally the voltage and collector electrodes 21, 22 can also be coupled to voltage sources, in which case the potential of the electrodes 21, 22 are primarily determined on the basis of said voltage input. In both cases, the potential differences between voltage and collector electrodes 21, 22 must be kept at a proper level.

In an application it is also possible to control the corona flow. The electrodes close to the corona electrode 11, the polarity of which electrodes is the same as that of the corona discharge, can limit the intensity of the corona discharge to the direction in question. In one case it is possible to control the corona flow between the corona electrode 11 and the voltage electrodes 21 almost to zero. Thus, the corona discharge is limited mainly to the other parts of the discharger 1, typically to the space between the corona electrode 11 and its counter electrode 12. The control of corona discharge can be accomplished most effectively if the potential of the whole collector cell 2 is raised to a proper level, i.e. both collection and voltage electrodes 21, 22 are provided with voltages of the same polarity as the corona discharge. The voltage difference between the collection electrodes 22 and voltage electrodes 21 must naturally be kept on a proper level. The possibility to decrease the corona flow can be necessary, for example, when minimizing the power consumption and ozone generation of the corona discharger 1. The potential difference between the corona electrode 11 and the collector cell 2 can naturally be utilized in the opposite way as well, i.e. by reversing the polarity of the voltage that is connected to the electrodes 21, 22 it is possible to intensify the corona discharge to the direction of the cell 2.

### Pre-filter

In automotive applications the use of an electric filter is a good alternative when aiming to purify air of small particles. By means of a conventional filtering technique it is very difficult to reach a good collecting efficiency, because the space reserved for the filter is small and the pressure difference of the filter cannot be high, On the other hand, the supply air of a vehicle cabin also comprises a large number of large particles, which are collected to the front part of the collector cell. In addition, there may also be, *inter alia,* insects and water drops in the air, which when gathering on the collector cell may cause short circuits and/or extra earth current. It is also characteristic to the electric filter that it produces small amounts of ozone, which must generally be filtered with, for example, an activated carbon filter. Fig. 11 shows a solution, by means of which it is possible to improve the reliability of an electric filter especially in the cases where there is a large amount of rough dust, insects and water drops in the air. In this solution a mechanical filter 3 is disposed upstream of the system (air inlet) or at least upstream of the collector cell 2, for example, between the corona charger 1 and the collector cell 2. The mechanical filter 3 can be, for example, an active carbon filter or a so-called composite filter, which is characterized in a separating capacity for both the particles and gaseous impurities. In this solution the task of the mechanical filter 3 is naturally to remove most of the large particles and the ozone created in the corona discharge. In addition, its task is to separate all large objects with dimensions in the range of one millimeter or more, insects and water drops from air, i.e. such objects, which are harmful for the proper operation of an electric filter. In addition, it is to be noted that a mechanical filter 3 is located between a high-voltage corona electrode 11 and a collector cell 2 in a lower or opposite potential. Thus, an electric field is formed in the filter 3, which intensifies the attachment of particles, The mechanical filter 3 can also be integrated with the corona charge 1 and formed as a metal screen, the mechanical filter 3 increasing the corona effect. The filter 3 can also be composed of a plastic mesh grid or, in general, made of any non-woven material. The filter 3 should have a very low pressure drop impact.

When using thin partly conductive filter layers and/or nets as a mechanical filter or instead of it, in addition to the shielding purpose, said structure can also be utilized as an electric contact, i.e. as a structure, by means of which a suitable electric contact is gained for example for the voltage electrodes 21, such as is shown in Fig. 12, for example. This solution is most likely to be an advantageous solution when using partly conductive electrode materials.

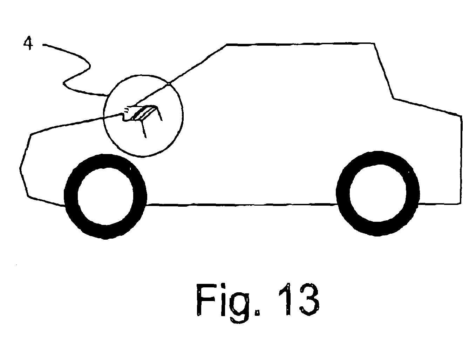

The precipitator solution according to the invention is primarily intended for purifying vehicle cabin air. Fig. 13 shows in principle the location of a precipitator in connection with a vehicle air inlet in an automotive solution. The different applications of the above-presented precipitator solution have several application possibilities in other precipitator applications as well, such as, for example, different room air purifiers and space-specific supply air filters.

In an application the impurities that remain between the electrode plates 21, 22 of the collector unit 2 are removed by coupling momentarily a high potential difference to the electrodes. The possible impurities (litter, insects, etc) burn off, In another application, in turn, the collector unit 2 is disinfected with ozone, The ozone is advantageously produced by a corona discharger. In some automotive applications the above-mentioned burning and/or disinfection takes place with a delay after the vehicle has stopped, in which case the passengers have advantageously already left the vehicle.

In addition, it is to be noted that the filter 3 can be used to spread out the airflow to reach high efficiency of the charger unit 1.

Besides, an additional after-filter 4 arranged downstream of the collector unit 2 in the airflow direction F can collect particles agglomerated and released from the collector unit 2 (Fig. 11). The after-filter 4 will also remove small amounts of ozone created by the electric filter. The after-filter 4 can be, for example, an activated carbon filter or composite filter. Preferably, the after-filter 4 has a minimum frontal area of 4 dm² and a minimum thickness of 20 mm. The carbon density is in the range of 200 g/m² to 100 g/m².

To generalize the present invention, the precipitator comprises a ground and a voltage electrode. Each electrode can be coupled to ground or to a voltage source. According to the voltage of the electrode, the particles will be attracted or pushed back by the electrode. Similarly, the main principle of the present invention is related to loading of the particles.

The present invention is described with a particular kind of electrode material. These can be a metallic or non-metallic material. Obviously, those electrodes may be partially or totally conductive or an insulating material.

The elements of the precipitator can be assembled one after the other. Alternatively, the precipitator can be arranged as a preassembled unit. By combining, in various ways, the modes and structures disclosed in connection with the different embodiments of the invention presented above, it is possible to produce various embodiments of the invention in accordance with the spirit of the invention. Therefore, the above-presented examples must not be interpreted as restrictive to the invention, but the embodiments of the invention may be freely varied within the scope of the inventive features presented in the claims herein below.

## Claims

1. A precipitator, which comprises at least
- a charger unit (1), which is arranged to electrically charge particles in the air flow to be purified
- a collector unit (2), which is arranged to collect the charged particles, and which collector unit comprises
- a first set of first electrode plates (21), which are voltage electrodes, and
- a second set of second electrode plates (22), which are collector electrodes,
**characterized in that** the width (w) of the electrode plate (21, 22) in the flow direction (F) is smaller than the length (1) of the electrode plate in a direction perpendicular to the flow direction, and the direction of the surface of the electrode plate changes in the flow direction in order to brace the electrode plate.

2. The precipitator according to claim 1, **characterized in that** the electrode plate (21, 22) is of a non-metallic material.

3. The precipitator according to claim 1 or 2, **characterized in that** the electrode plate (21, 22) is coated with a conductive coating.

4. The precipitator according to any of the preceding claims, **characterized in that** the electrode plate (21, 22) is formed of an adsorbing material.

5. The precipitator according to any of the preceding claims, **characterized in that** the electrode plates (21, 22) are attached only from their ends.

6. The precipitator according to any of the preceding claims, **characterized in that** a distance (d) between adjacent electrode plates (21, 22) is in a range of 1 to 7 mm, preferably 1.7 to 2.3 mm, more particularly 2 mm,

7. The precipitator according to any of the preceding claims, **characterized in that** a thickness of the electrode plates (21, 22) is approximately less than 1 mm.

8. The precipitator according to any of the preceding claims, **characterized in that** the width (w) of the electrode plates (21, 22) in the flow direction (F) is in a range of 10 to 25 mm.

9. The precipitator according to any of the preceding claims, **characterized in that** the width (w) of the charger unit (1) is 10 mm.

10. The precipitator according to any of the preceding claims, **characterized in that** the length (1) of the electrode plates (21, 22) is between 50 and 100 mm.

11. The precipitator according to any of the preceding claims, **characterized in that** the electrode plates (21, 22) are curved.

12. The precipitator according to any of the preceding claims, **characterized in that** the electrode plates (21, 22) are planar.

13. The precipitator according to any of the preceding claims, **characterized in that** the electrode plates (21, 22) are folded.

14. The precipitator according to any of the preceding claims, **characterized in that** the precipitator comprises a pre-filter (3), which is between the charger unit (1) and the collector unit (2) in the air flow direction (F).

15. The precipitator according to claim 14, **characterized in that** the pre-filter (3) is arranged to form an electric contact for the voltage electrodes (21).

16. The precipitator according to any of the preceding claims, **characterized in that** the precipitator comprises a corona charger (1), whose corona electrode (11) is arranged to form a potential difference with respect to the collector unit (2)

17. The precipitator according to any of the preceding claims, **characterized in that** the voltage electrodes (21) are floating.

18. The precipitator according to any of claim 1 to 16, **characterized in that** each of the voltage electrodes (21) are connected to an associated voltage source.

19. The precipitator according to any of the preceding claims, **characterized in that** the precipitator comprises a collector unit (2), whose potential can be used to intensify or weaken the corona discharge in the charger (1).

20. The precipitator according to any of the preceding claims, **characterized in that** the precipitator comprises an adjustable current supply for the charger unit (1).

21. The precipitator according to any of the preceding claims, **characterized in that** the nominal output voltage value of the collector unit (2) is in a range of 1.5 and 3 kV.

22. The precipitator according to any of the preceding claims, **characterized in that** the precipitator comprises an adjustable voltage supply for the voltage electrodes (21).

23. The precipitator according to any of the preceding claims, **characterized in that** the nominal output current value of the charger unit (1) is in a range of 0.5 to 1 mA and the output voltage range is between 5 and 7 kV.

24. The precipitator according to any of the preceding claims, **characterized in that** the precipitator comprises an after-filter (4), which is located downstream of the collector unit (2) in the air flow direction (F).

25. A vehicle, which comprises at least a precipitator, which comprises at least
- a charger unit (1), which is arranged to electrically charge particles in the air flow to be purified
- a collector unit (2), which is arranged to collect the charged particles, and which the collector unit comprises
- a first set of first electrode plates (21), which are voltage electrodes, and
- a second set of second electrode plates (22), which are collector electrodes,
**characterized in that** the width (w) of the electrode plate (21, 22) in the flow direction (F) is smaller than the length (1) of the electrode plate in a direction perpendicular to the flow direction, and the direction of the surface of the electrode plate changes in the flow direction in order to brace the electrode plate.
